# EUROPEAN PATENT APPLICATION

(11) **EP 3 113 049 A1**
(43) Date of publication of application: **04.01.2017**
(21) Application number: 15755481.7
(22) Date of filing: 23.02.2015
(51) Int. Cl.: G06F 17/30, G06F 12/00

(54) **DEVICE, METHOD, AND SYSTEM FOR MANAGING REPOSITORY**

(30) Priority: 26.02.2014 JP 2014035285
(71) Applicant: NEC Corporation, Tokyo 108-8001 (JP)
(72) Inventor: HATAKEYAMA, Makoto, Tokyo 108-8001 (JP)
(74) Representative: Betten & Resch
(86) International application number: PCT/JP2015/000867
(87) International publication number: WO 2015/129239

(57) **Abstract**

Provided are a device, method, and system for managing a repository allowing efficient assessment of a repository in which updated user information is stored. The repository management device is provided with: a request reception unit for receiving, from a service server, electronic messages requesting user information; a user updated-information discovery unit for referring to user information location information, which is information capable of specifying the repository storing the latest-updated user information among a plurality of repositories where user information is stored, and for determining the repository in which the latest-updated user information is stored; a repository access unit for acquiring, from the determined repository, user information corresponding to the electronic message; and a response transmission unit for transmitting to the service server the information acquired from the repository access unit.

## Description

### [Technical Field]

The present invention relates to a repository management device, a repository management method, and a repository management system.

### [Background Art]

The repository management device of the present invention is connected to a plurality of repositories and used to comprehensively manage information, such as user information, that is separately managed by each repository.

For example, PTL 1 discloses a database integration system in which a server computer that received an access request from a console computer refers to a directory database where objects and their locations are managed to select a computer equipped with a database holding an object requested to be accessed and access the object from a database through the selected computer.

Moreover, PTL 2 discloses an authentication destination selection system in which a center server having a condition table for selecting an authentication device that has a user information repository receives a request for use of back-end web system and the like, retrieves the condition table based on the request to select the authentication device that executes authentication processing, and requests the selected authentication device to perform authentication processing.

Furthermore, PTL 3 discloses a user information synchronizing system that includes a plurality of servers that have user information repositories and a user information management server that has a user information management database and, if user information extracted from the user information management database includes user information that has not been modified, creates new user information and transmits the new user information to the server where the user information is updated.

### [Citation List]

### [Patent Literature]

[PTL 1]
   Japanese Unexamined Patent Application Publication No. 2001-5710
[PTL 2]
   Japanese Unexamined Patent Application Publication No. 2010-205166
[PTL 3]
   Japanese Unexamined Patent Application Publication No. 2004-342039

### [Summary of Invention]

### [Technical Problem]

However, in the database integration system of PTL 1, the directory database that manages objects and the locations of the objects does not have a function of recognizing which database stores the latest object. Further, in the authentication destination selection system of PTL 2, the user information repository equipped in the authentication device does not have a function of recognizing which user information repository stores the latest user information.

Further, while the user information synchronizing system of PTL 3 updates user information of the user information management database by referring to the update state data of the user information data in each server, the user information synchronizing system does not have a function of recognizing which server among the servers, of which user information has been modified, registers the latest user information.

The objective of the present invention is to solve the above problems and provide a repository management device, a repository management method, and a repository management system that efficiently recognize a repository that stores the latest information from among a plurality of repositories that store information.

### [Solution to Problem]

According to an exemplary aspect of the present invention, a repository management device including: a request reception unit that receives a message, which requests user information, from a service server; a latest user information discovery unit that determines a repository that stores last update user information by referring to user information location information that is information capable of identifying a repository that stores the last update user information from among a plurality of repositories that store user information; a repository access unit that acquires the user information designated by the message from the determined repository; and a response transmission unit that transmits the information acquired by the repository access unit to the service server, is provided.

According to another exemplary aspect of the present invention, a repository management method of a repository management device that mediates communications between a service server and repositories, including: receiving a message, which requests user information, from a service server; determining a repository that stores last update user information by referring to user information location information that is information capable of identifying the repository that stores the last update user information from among a plurality of repositories that store user information; acquiring the user information designated by the message from the determined repository; and transmitting the acquired user information to the service server, is provided.

According to moreover another exemplary aspect of the present invention, a repository management system including: a service server that transmits a message requesting user information; a repository that stores user information; a request reception unit that receives the message, which requests the user information, from the service server; a latest user information discovery unit that determines a repository that stores last update user information by referring to user information location information that is information capable of identifying a repository that stores the last update user information from among a plurality of repositories that store user information; a repository access unit that acquires user information designated by the message from the determined repository; and a response transmission unit that transmits the information acquired from the repository access unit to the service server, is provided.

### [Advantageous Effect of Invention]

According to the present invention, a repository management device, a repository management method, and a repository management system that can efficiently recognize a repository that stores latest user information can be provided.

### [Brief Description of Drawings]

[Fig. 1] Fig. 1 is a block view illustrating a configuration of a repository management system 1000 that includes a repository management device 100 according to a first exemplary embodiment;
[Fig. 2] Fig. 2 is a diagram illustrating an operation of the repository management system 1000 according to the first exemplary embodiment;
[Fig. 3] Fig. 3 is a block view illustrating a configuration of a repository management system 2000 that includes a repository management device 200 according to a second exemplary embodiment;
[Fig. 4] Fig. 4 is a diagram illustrating an example of user information location information 1;
[Fig. 5] Fig. 5 is a diagram illustrating an example of conversion table 2;
[Fig. 6] Fig. 6 is a diagram illustrating an example of correspondence table 3;
[Fig. 7] Fig. 7 is a diagram illustrating a utilization example of the repository management system 2000 according to the second exemplary embodiment;
[Fig. 8] Fig. 8 is a flowchart illustrating an operation of the repository management system 2000 according to the second exemplary embodiment;
[Fig. 9] Fig. 9 is a block view illustrating a configuration of a repository management system 3000 that includes a repository management device 300 according to a third exemplary embodiment;
[Fig. 10A] Fig. 10A is a diagram illustrating an operation of the repository management system 3000 according to the third exemplary embodiment;
[Fig. 10B] Fig. 10B is a flowchart illustrating update processing of the repository management device 300 according to the third exemplary embodiment;
[Fig. 11] Fig. 11 is a block view illustrating a configuration of a repository management system 4000 that includes a repository management device 400 according to a fourth exemplary embodiment;
[Fig. 12] Fig. 12 is a block view illustrating a configuration of a repository management system 5000 that includes a repository management device 500 according to a fifth exemplary embodiment;
[Fig. 13] Fig. 13 is a diagram illustrating a utilization example of a repository management system according to the exemplary embodiments of the present invention;
[Fig. 14] Fig. 14 is a diagram illustrating another utilization example of a repository management system according to the exemplary embodiments of the present invention;
[Fig. 15] Fig. 15 is a diagram illustrating still another utilization example of a repository management system according to the exemplary embodiments of the present invention; and
[Fig. 16] Fig. 16 is a diagram illustrating a user information management system in a related technique.

### [Description of Embodiments]

### [First Exemplary Embodiment]

The following will describe the exemplary embodiments of the present invention with reference to the drawings.

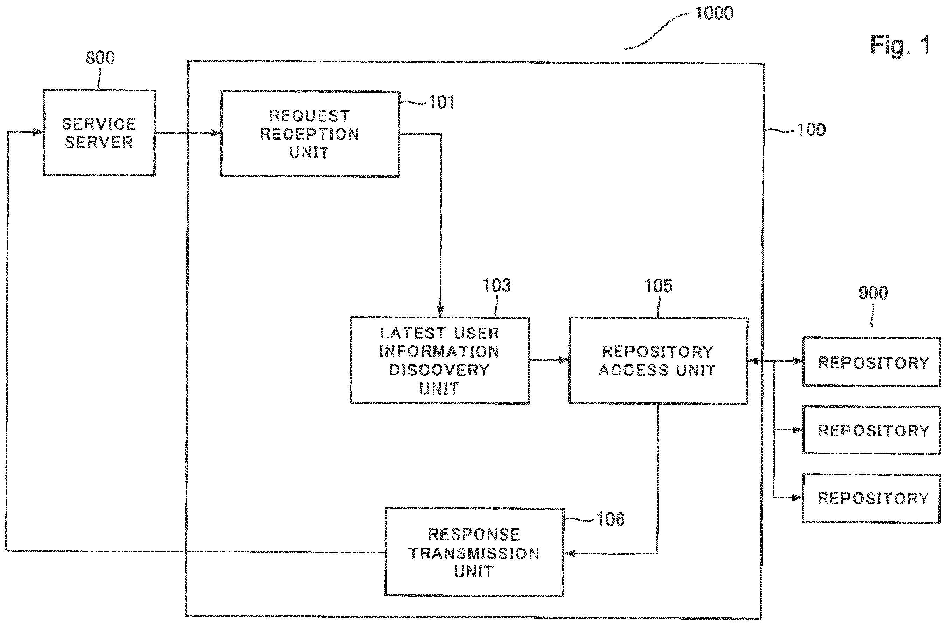

Fig. 1 is a diagram illustrating a configuration of a repository management system 1000 that includes a repository management device 100 according to a first exemplary embodiment.

The repository management system 1000 includes a repository management device 100, a service server 800, and repositories 900.

The repository 900 is a device that accumulates information to be provided for users. The repository 900 manages information of users who uses the repository 900. The user information may be information that represents a user, such as a name, an address, a telephone number, and an e-mail address, or may be any other information relating to the user. For example, information that is not immediately associated with a user, such as access history information, a hobby, and a preference, may also be used as user information. It should be noted that the user information registered in each repository is associated with a user ID (identification).

The service server 800 is, for example, an e-mail service server that provides an e-mail service or an accounting service server that provides a service such as accounting system. The service server 800 checks whether a user is registered in the repository 900 and provides the user with a service.

The repository management device 100 mediates communications regarding user information between the service server 800 and a plurality of repositories 900 that store user information that is updated at arbitrary timing.

The repository management device 100 includes a request reception unit 101, a latest user information discovery unit 103, a repository access unit 105, and a response transmission unit 106.

The request reception unit 101 receives a message (a request message), which requests user information, from the service server 800. The request message includes, for example, the user ID of a specific user whose user information is requested by the service server 800 and the specific type of user information which is requested by the service server 800.

The latest user information discovery unit 103, for example, searches user information location information 1 that is stored in a storage unit or the like that is connected with the repository management device 100 and determines which repository registers the last update (latest) user information. The latest user information discovery unit 103 searches for a repository that stores the latest information using the type of user information included in the request message as a clue.

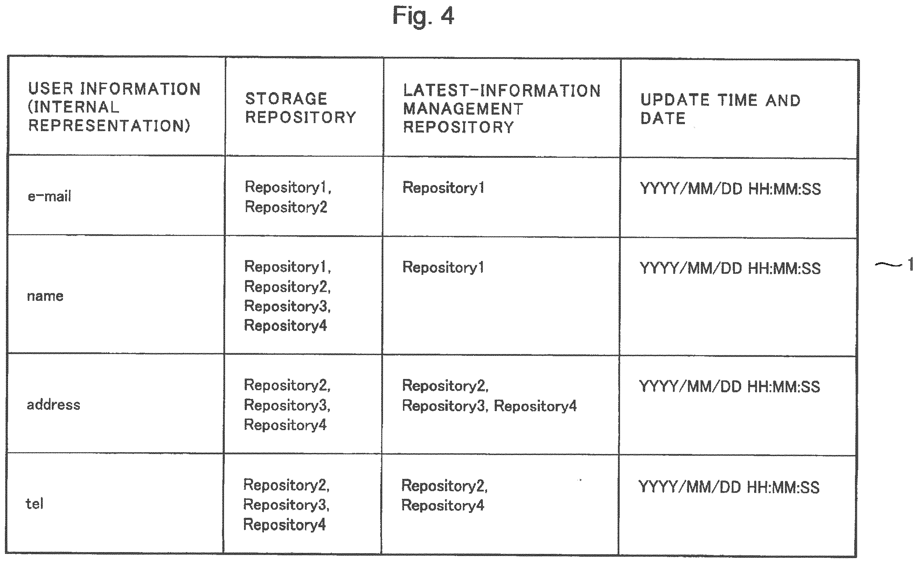

Fig. 4 is a diagram illustrating a configuration of the user information location information 1. The user information location information 1 is information in which a repository that stores user information (a storage repository), a repository that stores latest information (a latest-information management repository), and the last update time and date of the user information are associated with one another for each type, such as an e-mail address, a name, or the like.

The latest user information discovery unit 103 determines a repository that stores the latest information, from which user information is to be acquired. For example, if the requested type of user information is e-mail, since the latest-information management repository is Repository 1 as illustrated in Fig. 4, the repository where the latest information is stored is determined as Repository 1. If the requested type of user information is address, as illustrated in Fig. 4, there are a plurality of latest-information management repositories, such as Repository 2, Repository 3, and Repository 4. In such a case, any one of the repositories, for example, Repository 2 is determined as a repository that stores the latest information.

The repository access unit 105 acquires, from the repository determined by the latest user information discovery unit 103, user information corresponding to the user ID of a specific user designated by the request message transmitted by the service server 800.

The response transmission unit 106 transmits the user information corresponding to the user ID of the specific user, acquired by the repository access unit 105, to the service server 800.

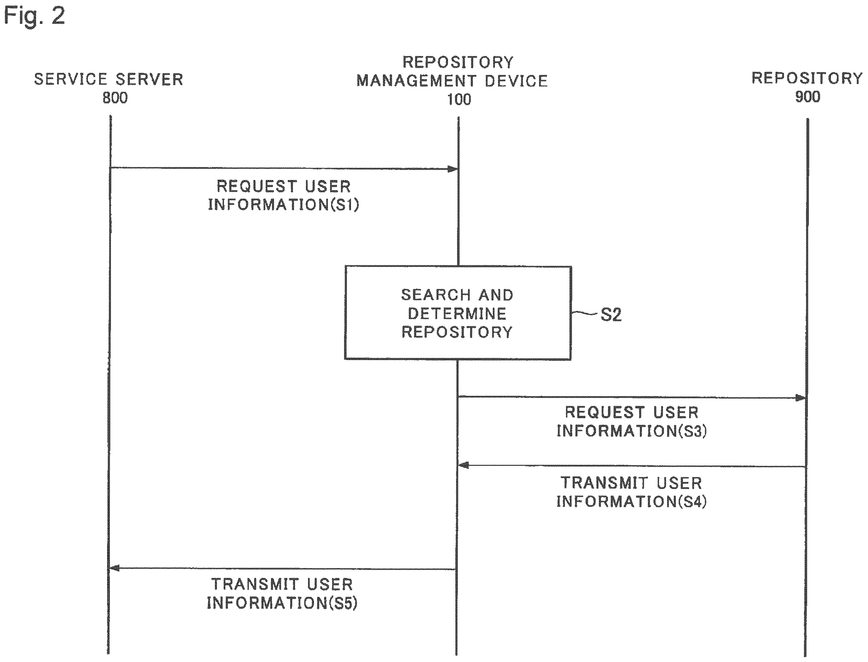

Next, the operation of the repository management system 1000 according to the first exemplary embodiment will be described. Fig. 2 is a diagram illustrating the operation of the user information management system 1000.

The request reception unit 101 of the repository management device 100 receives, from the service server 800, a request (a request message) for user information (step S1). The latest user information discovery unit 103 searches the user information location information 1 based on the type of user information included in the request message as described above and determines the repository 900 that stores the latest user information (step S2). The repository access unit 105 requests the latest user information, which corresponds to the user ID of the specific user included in the request message transmitted by the service server 800, of the repository 900 determined by the latest user information discovery unit 103 (step S3). Upon receiving the request for the user information transmitted by the repository access unit 105, the repository 900 returns the user information of the requested user ID. The repository access unit 105 acquires the user information, which is designated by the request message transmitted by the service server 800, from the repository 900 (step S4). Upon the repository access unit 105 receiving the latest user information from the repository 900, the response transmission unit 106 receives the received information from the repository access unit 105 and transmits the information to the service server 800 (step S5).

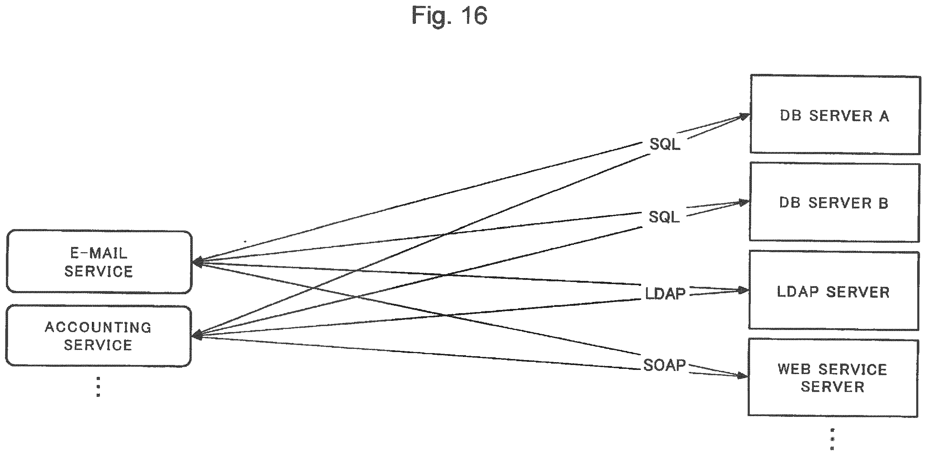

According to the repository management device 100 of the first exemplary embodiment, the latest user information discovery unit 103 searches the user information location information and determines to acquire user information from the repository that stores the latest user information. As such, the repository that stores the latest user information can be efficiently recognized. Fig. 16 is a diagram illustrating a user information management system in a related technique. As devices that manage user information (repositories), there are DB (database) servers, a LDAP (Lightweight Directory Access Protocol) server, and the like. There are a plurality of services that access the repositories, such as an e-mail system and an accounting system. In the system of Fig. 16, when each service requests user information, the service creates a request message for every repository and accesses every repository. Further, each service independently manages what kind of user information is stored in each repository. For example, if an e-mail address of an end user is registered in a DB server and a LDAP server, and a system administrator updates the e-mail address registered in the DB server, the service server needs to request the e-mail address of all the repositories and determine whether each e-mail address is the latest information. According to the repository management device 100 of the first exemplary embodiment, even if a system administrator updates an e-mail address registered in one repository, there is no need to request the e-mail address from all the repositories and determine whether each e-mail address is the latest information.

### [Second Exemplary Embodiment]

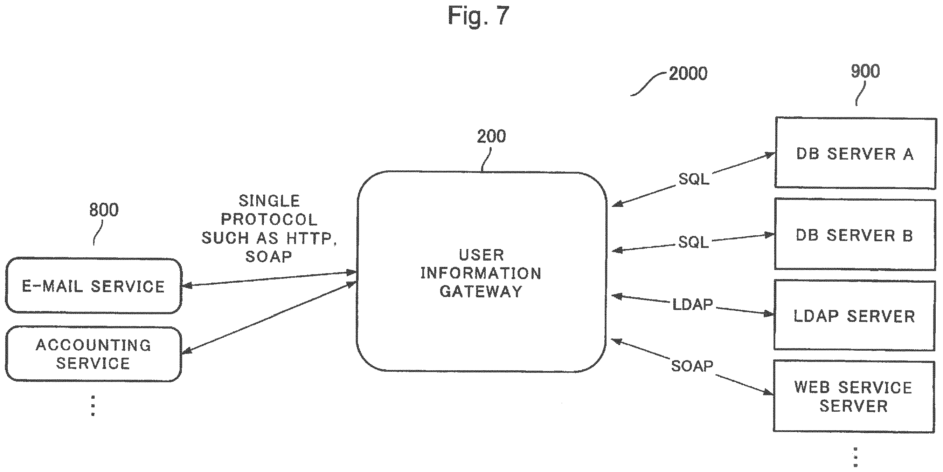

Fig. 7 is a diagram illustrating a utilization example of a repository management system 2000 according to the second exemplary embodiment. The repository management system 2000 includes a user information gateway 200, service servers 800, and repositories 900. Fig. 7 illustrates an e-mail service and an accounting service as an example of services and a DB server A, a DB server B, a LDAP server, a Web service server as an example of repositories.

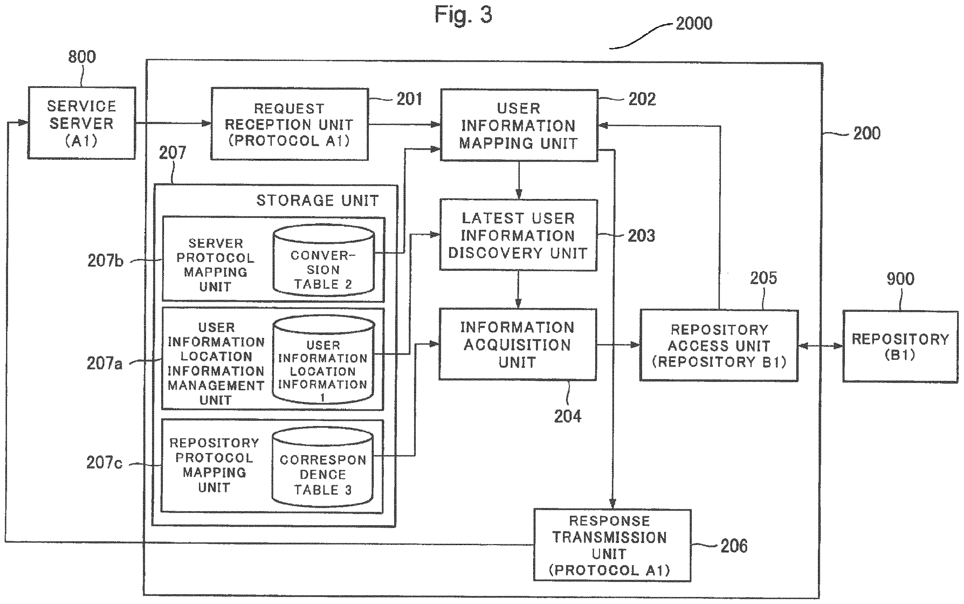

Fig. 3 is a diagram illustrating a configuration of the repository management system 2000 that includes a repository management device according to the second exemplary embodiment. In the following exemplary embodiments, a user information gateway will be described as an example of a repository management device. Further, a configuration where a storage unit is provided in the user information gateway will be described.

The user information gateway 200 mediates communications regarding user information between the service server 800 and the repository 900. The user information gateway 200 communicates with each service server 800 using a single protocol. For example, communications are performed by HTTP (Hypertext Transfer Protocol) in communications with an e-mail service server and communications are performed by SOAP (Simple Object Access Protocol) in communications with an accounting service server.

The user information gateway 200 includes a request reception unit 201, a user information mapping unit 202, a latest user information discovery unit 203, an information acquisition unit 204, a repository access unit 205, a response transmission unit 206, and a storage unit 207.

The request reception unit 201 receives a message (a request message), which requests user information, from the service server 800. There may be a plurality of request reception units 201 for respective protocols used by the user information gateway 200. Further, the request reception unit 201 may directly receive a request message from the service server 800 or may indirectly receive a request message via a browser or the like. In the same way as the first exemplary embodiment, a request message includes, for example, the user ID of a specific user whose user information is requested by the service server 800 and the specific type of user information requested by the service server 800.

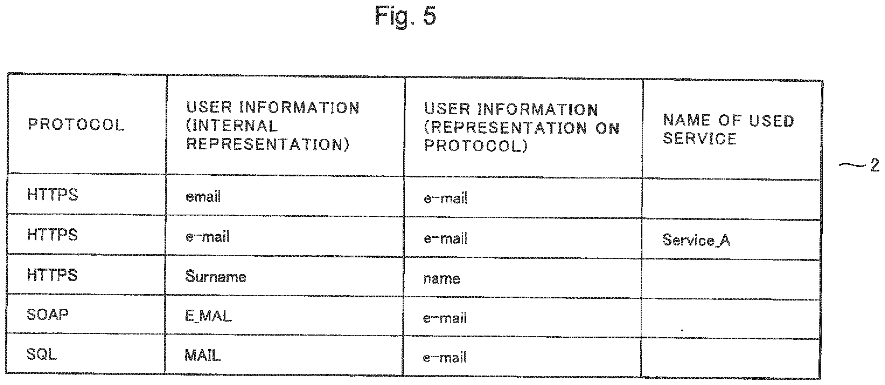

The request message, transmitted from the service server 800, is input from the request reception unit 201 to the user information mapping unit 202. The user information mapping unit 202 converts the request message indicating the type of user information that differs for each protocol of the service server 800 (a representation on a protocol), which is managed by a server protocol mapping unit 207b of the storage unit 207, to a message (an internal representation) that is defined in the user information gateway 200 by referring to a conversion table 2 as illustrated in Fig. 5 and outputs the message to the latest user information discovery unit 203. Further, as will be described later, the user information from the repository 900 is also input from the repository access unit 205 to the user information mapping unit 202. The user information mapping unit 202 converts the representation indicating the type of user information on the protocol of the repository 900 to a representation in the service server 800 by referring to the conversion table 2 managed in the server protocol mapping unit 207b of the storage unit 207 and outputs the representation to the response transmission unit 206. The message defined in the user information gateway 200 is converted to a response message that differs for each protocol.

The latest user information discovery unit 203 searches the user information location information 1 as illustrated in Fig. 4 for a repository that registers the latest user information, based on the type of user information that was included in the request message and converted to the internal representation. The user information location information 1 is stored in a user information location information management unit 207a of the storage unit 207. The latest user information discovery unit 203 determines to acquire the user information from the repository that stores the latest information.

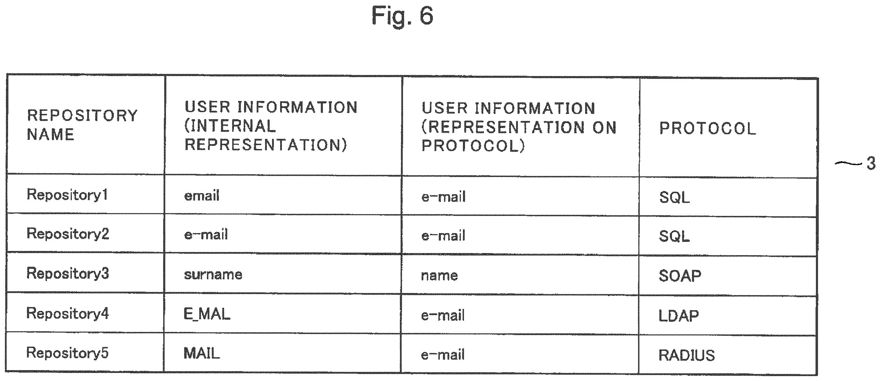

The information acquisition unit 204 determines the type of user information (e-mail, name, address, telephone number, and the like) that the repository serves. The information acquisition unit 204 converts the internal representation indicating the type of user information to a representation on the protocol used by the repository determined by the latest user information discovery unit 203 by referring to a correspondence table 3 as illustrated in Fig. 6 that is managed by a repository protocol mapping unit 207c of the storage unit 207 and creates a request message for the determined repository. If the information acquisition unit 204 determines that the type of user information is, for example, "e-mail," the information acquisition unit 204 creates a message that requests an e-mail address.

The repository access unit 205 transmits the request message that was created by the information acquisition unit 204 to the repository. The repository that received the request message transmits the latest user information in response to the request message from the user information gateway 200. The repository access unit 205 receives the latest user information from the repository. The repository access unit 205 may exist for each protocol for accessing the repository.

Upon receiving the latest user information from the repository, the repository access unit 205 outputs the latest user information and information of the protocol of the repository to the user information mapping unit 202. The user information mapping unit 202 converts the representation indicating the type of user information on the protocol of the repository to a representation on the protocol of the service server 800 that requested the user information by referring to the conversion table 2 managed by the server protocol mapping unit 207b, creates a response message for the service server 800, and outputs the response message to the response transmission unit 206. The response transmission unit 206 transmits the response message created by the user information mapping unit 202 to the service server 800. It should be noted that there may be a plurality of response transmission units 206 for respective protocols.

The storage unit 207 stores user information location information 1, a conversion table 2, and a correspondence table 3. In other words, the storage unit 207 includes a user information location information management unit 207a, a server protocol mapping unit 207b, and a repository protocol mapping unit 207c.

The user information location information management unit 207a manages the user information location information 1. As illustrated in Fig. 4, the user information location information 1 includes information in which the type of user information, such as an e-mail address and a name, (internal representation), a repository that stores the user information (storage repository), a repository that stores the latest information (latest-information management repository), and the last update time and date of the user information are associated with one another. The user information location information 1 is used when the latest user information discovery unit 203 searches for a repository that stores the latest user information (latest-information management repository).

The server protocol mapping unit 207b manages the conversion table 2. The conversion table 2 is a table that indicates correspondence among a protocol for communications with the service server 800, a representation of user information on the protocol, and a representation of user information in the user information gateway 200 (internal representation). As illustrated in Fig. 5, for example, the conversion table 2 indicates that a request message (a representation on a protocol) "e-mail" corresponds to an internal representation "email" in the user information gateway 200. The conversion table 2 is used to convert a request message that differs for each protocol to a message defined in the user information gateway 200. Further, the conversion table 2 is also used to convert a message defined in the user information gateway 200 to a response message that differs for each protocol. The conversion table 2 may be a conversion table for each combination of a service server and a repository without limitation to the conversion table for each protocol as illustrated in Fig. 5. The information that the server protocol mapping unit 207b manages includes information for mapping the type of user information, as well as, information for converting a message.

The repository protocol mapping unit 207c manages the correspondence table 3. As illustrated in Fig. 6, the correspondence table 3 is a table that indicates correspondence between the name of a repository and a protocol for communicating with the repository. Further, the correspondence table 3 also indicates correspondence between a message that is defined in the user information gateway 200 (internal representation) and a message for requesting user information of a repository (representation on a protocol). The information that the repository protocol mapping unit 207c manages includes information for associating (mapping) the type of user information defined in the user information gateway 200 and the type of user information in a repository, as well as, information for converting a message.

Next, the operation of the repository management system 2000 will be described.

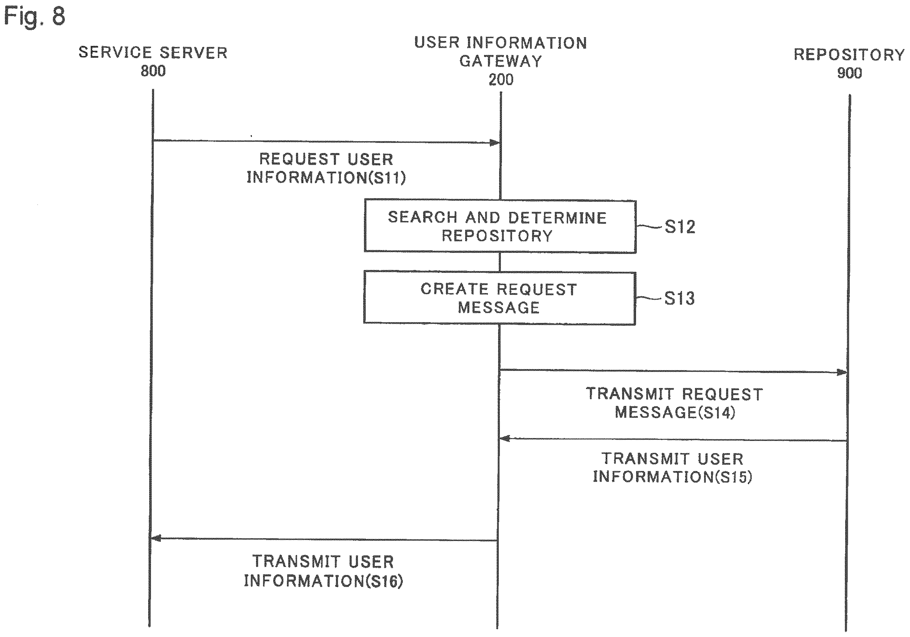

Fig. 8 is a diagram illustrating the operation of the repository management system 2000. The request reception unit 201 of the user information gateway 200 receives a message (a request message), which requests user information, transmitted from the service server 800 (step S11). The received request message is input from the request reception unit 201 to the user information mapping unit 202. The user information mapping unit 202 converts a representation indicating the type of user information on a protocol to an internal representation by referring to the conversion table 2 that is managed by the server protocol mapping unit 207b and outputs the internal representation to the latest user information discovery unit 203. The latest user information discovery unit 203 searches the user information location information 1 based on the type of user information, which was included in the request message and converted to the internal representation, and determines to acquire user information from the repository that stores the latest user information (step S12). The latest user information discovery unit 203 outputs the request message, which is the type of user information converted to the internal representation, and information of the determined repository to the information acquisition unit 204. The information acquisition unit 204 converts the internal representation indicating the type of user information to a representation on the protocol used by the repository determined by the latest user information discovery unit 203 by referring to the correspondence table 3 that is managed by the repository protocol mapping unit 207c and creates a request message for the determined repository (step S13). The repository access unit 205 transmits the request message that was created by the information acquisition unit 204 to the repository (step S14). The repository that received the request message transmits the latest user information in response to the request message from the user information gateway 200 (step S15). Upon receiving the latest user information from the repository, the repository access unit 205 outputs the latest user information and information of the protocol of the repository to the user information mapping unit 202. The user information mapping unit 202 converts the representation indicating the type of user information on the protocol of the repository to a representation on the protocol of the service server 800, from which the request message was received at step S11 by referring to the conversion table 2 managed by the server protocol mapping unit 207b, creates a response message for the service server 800, and outputs the response message to the response transmission unit 206. The response transmission unit 206 transmits the response message to the service server 800 (step S16).

According to the user information gateway 200 of the second exemplary embodiment, the latest user information discovery unit 203 searches the user information location information and determines to acquire user information from the repository that stores the latest user information. As such, a user information gateway capable of efficiently recognizing a repository that stores the latest user information can be provided.

Further, having the user information mapping unit 202 and the information acquisition unit 204, a repository that stores the latest user information can be efficiently recognized even among service servers and repositories using different protocols.

### [Third Exemplary Embodiment]

In the third exemplary embodiment, a case of updating the user information location information when the user information received from a repository has been modified will be described.

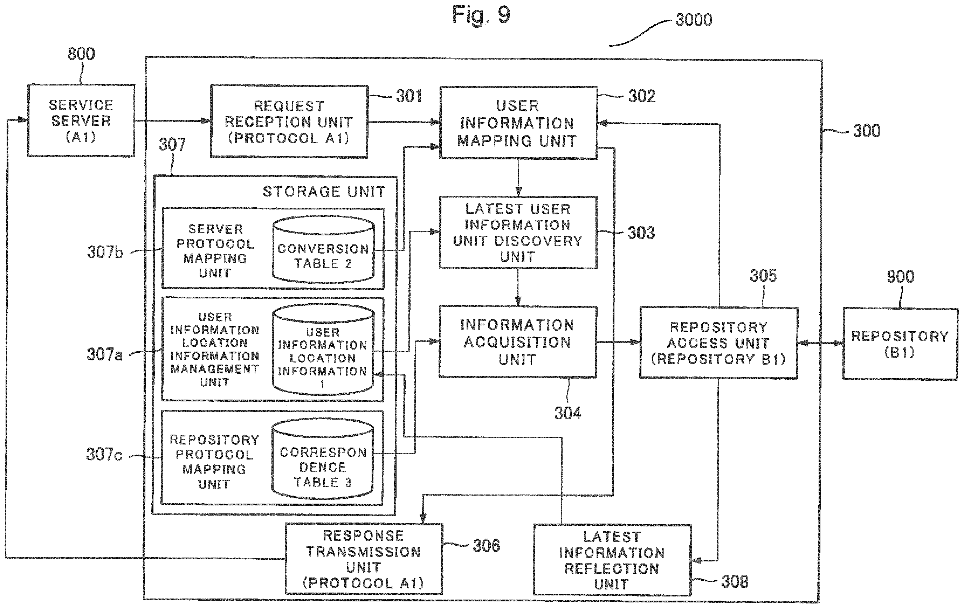

Fig. 9 is a diagram illustrating a configuration of a repository management system 3000 that includes a user information gateway 300 according to the third exemplary embodiment. The user information gateway 300 is further equipped with a latest information reflection unit 308 in addition to the user information gateway 200 according to the second exemplary embodiment. The user information gateway 300 includes a request reception unit 301, a user information mapping unit 302, a latest user information discovery unit 303, an information acquisition unit 304, a repository access unit 305, a response transmission unit 306, and a storage unit 307.

The request reception unit 301 receives a message (a request message), which requests user information, transmitted from the service server 800. There may be a plurality of request reception units 301 for respective protocols used by the user information gateway 300. Further, the request reception unit 301 may directly receive a request message from the service server 800 or may indirectly receive a request message via a browser or the like. In the same way as the first and second exemplary embodiments, a request message includes, for example, the user ID of a specific user whose user information is requested by the service server 800 and the specific type of user information requested by the service server 800.

The request message, transmitted from the service server 800, is input from the request reception unit 301 to the user information mapping unit 302. The user information mapping unit 302 converts the representation indicating the type of user information on the protocol of the service server 800 to an internal representation by referring to the conversion table 2 that is like the one of the second exemplary embodiment and managed by a server protocol mapping unit 307b of the storage unit 307 and outputs the internal representation to the latest user information discovery unit 303. Further, as will be described later, user information from the repository 900 is input from the repository access unit 305 to the user information mapping unit 302. The user information mapping unit 302 converts the representation indicating the type of user information on the protocol of the repository 900 to a representation in the service server 800 by referring to the conversion table 2 and outputs the representation to the response transmission unit 306.

The latest user information discovery unit 303 searches user information location information 1 like those in the first and second exemplary embodiments based on the type of user information, which was included in the request message and converted to the internal representation, and searches for a repository that registers the latest user information. The user information location information 1 is stored in a user information location information management unit 307a of the storage unit 307. The latest user information discovery unit 303 determines to acquire the user information from the repository that stores the latest information.

The information acquisition unit 304 determines the type (e-mail, name, address, telephone number, and the like) of user information that the repository serves. The information acquisition unit 304 converts the internal representation indicating the type of user information to a representation on the protocol used by the repository determined by the latest user information discovery unit 303 by referring to the correspondence table 3 like the one in the second exemplary embodiment that is managed by a repository protocol mapping unit 307c of the storage unit 307 and creates a request message for the determined repository.

The repository access unit 305 transmits the request message that was created by the information acquisition unit 304 to the repository. The repository that received the request message transmits the latest user information in response to the request message from the user information gateway 300. The repository access unit 305 receives the latest user information from the repository. The repository access unit 305 may exist for each protocol for accessing the repository.

Upon receiving the latest user information from the repository, the repository access unit 305 outputs the latest user information and information of the protocol of the repository to the user information mapping unit 302. The user information mapping unit 302 converts the representation indicating the type of user information on the protocol of the repository to a representation on the protocol of the service server 800 that requested the user information by referring to the conversion table 2 managed by the server protocol mapping unit 307b, creates a response message for the service server 800, and outputs the response message to the response transmission unit 306. The response transmission unit 306 transmits the response message created by the user information mapping unit 302 to the service server 800. It should be noted that there may be a plurality of response transmission units 306 for respective protocols.

The storage unit 307 stores the user information location information 1, the conversion table 2, and the correspondence table 3 like those in the second exemplary embodiment. In other words, the storage unit 307 includes the user information location information management unit 307a, the server protocol mapping unit 307b, and the repository protocol mapping unit 307c. The user information location information management unit 307a manages the user information location information 1. The server protocol mapping unit 307b manages the conversion table 2. The information managed by the server protocol mapping unit 307b also includes information for mapping the type of user information, as well as, information for converting a message. The repository protocol mapping unit 307c manages the correspondence table 3. The information managed by the repository protocol mapping unit 307c also includes information for associating (mapping) the type of user information defined in the user information gateway 300 and the type of user information in a repository, as well as, information for converting a message.

The latest user information discovery unit 303 has a function of searching all the repositories, in addition to the function of the latest user information discovery unit 203 of the user information gateway 200. In other words, the latest user information discovery unit 303 instructs the information acquisition unit 304 to create request messages that request the type of user information included in the request message with all the repositories including the repository that stores the latest user information that was determined by searching the user information location information 1 as destinations. The information acquisition unit 304 creates, by referring to the correspondence table 3, request messages that are representations on the protocols of respective repositories and converted from an internal representation indicating the type of user information to be destined to all the repositories.

The repository access unit 305 transmits the request messages that were created by the information acquisition unit 304 to all the repositories. The repository access unit 305 further acquires update times and dates, as well as, user information from all the repositories. The repository access unit 305 outputs the acquired user information and the update times and dates to the latest information reflection unit 308.

The latest information reflection unit 308 determines whether or not the user information has been modified by comparing the update time and date included in the information that the repository access unit 305 received and the update time and date included in the user information location information 1 and, if the user information has been modified, updates the user information location information 1. The update patterns of the user information location information is as follows: One and Two are update patterns in cases of searching for still latest update information than the latest-information management repository and searching all the repositories for the latest update information. Three and Four are update patterns in cases of searching all the repositories for the latest update information.
1. If the repository, from which the user information was acquired, is registered in the latest-information management repository, as well as, there is no change in the update time and date, the user information location information 1 is not updated.
2. If the repository, from which the user information was acquired, is registered in the latest-information management repository, as well as, there is a change in the update time and date, the update time and date of the user information location information 1 is changed to the update time and date acquired from the repository.
3. If the repository, from which the user information was acquired, is not registered in the latest-information management repository, as well as, there is no change in the update time and date, the content of the latest-information management repository is changed to the repository, from which the user information was acquired.
4. If the repository, from which the user information was acquired, is not registered in the latest-information management repository, as well as, there is a change in the update time and date, the update time and date of the user information location information 1 is changed to the update time and date acquired from the repository and the content of the latest-information management repository of the user information location information 1 is changed to the repository, from which the user information was acquired.

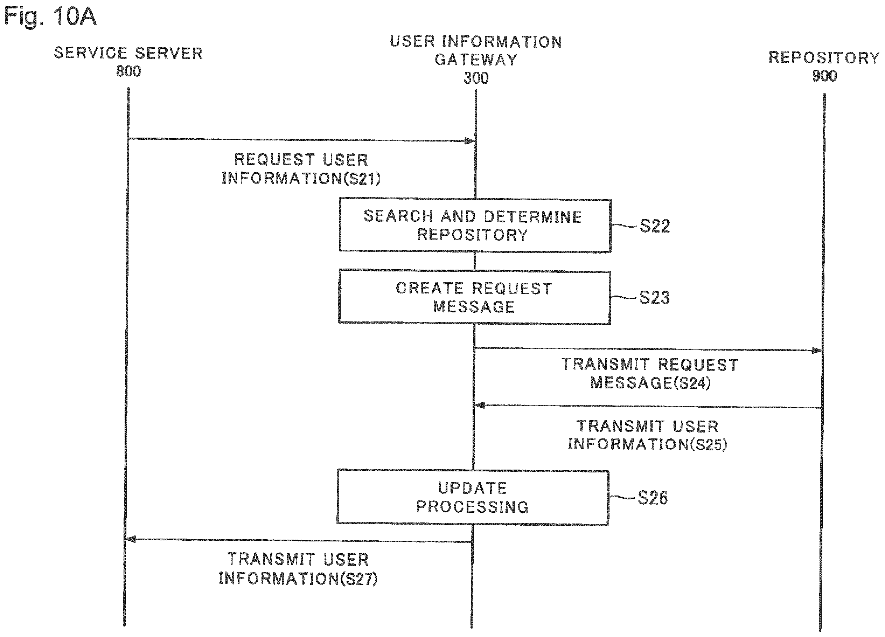

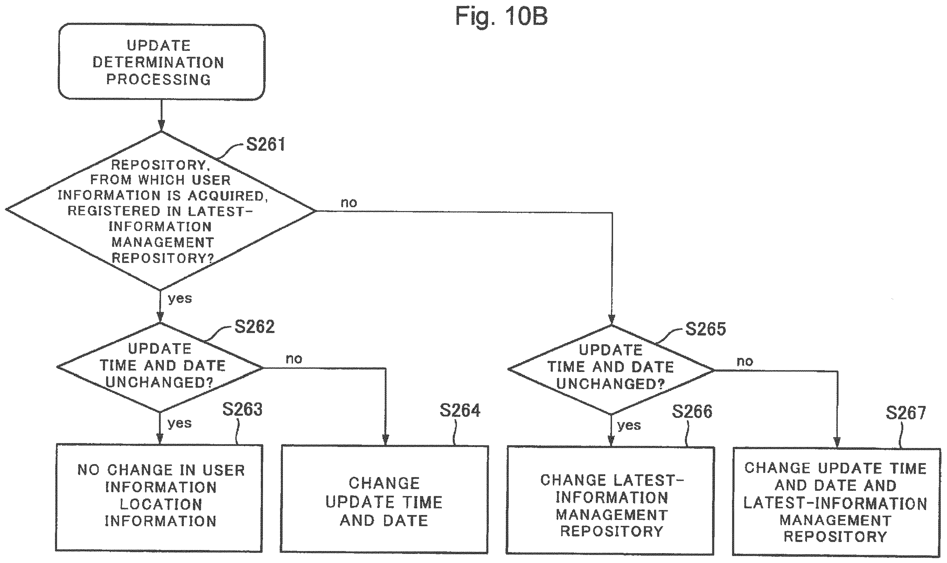

Next, the operation of the repository management system 3000 will be described. Fig. 10A is a diagram illustrating the operation of the repository management system 3000. Fig. 10B is a flowchart illustrating the update processing at step S26 of Fig. 10A in detail.

Since the request reception unit 301 of the user information gateway 300 receives a user information request, which was transmitted from the service server, until the repository returns the latest user information to the user information gateway 300, that is, the operations of steps S21 to S25, are the same as the operations of the second exemplary embodiment (steps S11 to S15 in Fig. 8). As such, the request reception unit 301 of the user information gateway 300 receives a message (a request message), which requests user information, from the service server 800 (step S21). The received request message is input from the request reception unit 301 to the user information mapping unit 302. The user information mapping unit 302 converts the representation indicating the type of user information on a protocol to an internal representation by referring to the conversion table 2 that is managed by the server protocol mapping unit 307b and outputs the internal representation to the latest user information discovery unit 303. The latest user information discovery unit 303 searches the user information location information 1 based on the type of user information, which was included in the request message and converted to the internal representation, and determines the repository that stores the latest user information so as to create a request message (step S22). It should be noted that, in the third exemplary embodiment, the latest user information discovery unit 303 determines all the repositories as destinations and instructs the information acquisition unit 304 to create request messages. The information acquisition unit 304 converts the internal representation indicating the type of user information to representations on respective protocols used by the repositories by referring to the correspondence table 3 that is managed by the repository protocol mapping unit 307c and creates request messages for the determined repositories (step S23). The repository access unit 305 transmits the request messages that were created by the information acquisition unit 304 to the repositories (step S24). Each repository that received the request message transmits the user information in response to the request message that was transmitted from the user information gateway 200 (step S25).

In the third exemplary embodiment, when the repository access unit 305 receives the latest user information and update time and date from the repository, the latest information reflection unit 308 determines whether the received information has been modified according to the above-described 1 to 4 update patterns and, if the received information has been modified, updates the user information location information 1 (step S26). In particular, if the repository, from which the user information was acquired, is registered in the latest-information management repository (yes at step S261 of Fig. 10B), as well as, there is no change in update time and date (yes at step S262), the user information location information 1 is not updated (step S263). Whereas, if the repository, from which the user information was acquired, is registered in the latest-information management repository (yes at step S261), as well as, there is a change in the update time and date (no at step S262), the update time and date of the user information location information 1 is changed to the update time and date acquired from the repository (step S264).

If the repository, from which the user information was acquired, is not registered in the latest-information management repository (no at step S261), as well as, there is no change in the update time and date (yes at step S265), the content of the latest-information management repository is changed to the repository, from which the user information was acquired (step S266). If the repository, from which the user information was acquired, is not registered in the latest-information management repository (no at step S261), as well as, there is a change in the update time and date (no at step S265), the update time and date of the user information location information 1 is changed to the update time and date acquired from the repository and the content of the latest-information management repository of the user information location information 1 is changed to the repository, from which the user information was acquired (step S267).

After the above update processing, the user information mapping unit 302 converts the received latest information to a response message for each service, and the response transmission unit 306 transmits the response message to the service server 800 (step S27).

With the user information gateway 300 of the third exemplary embodiment, having the latest information reflection unit 308, an update of the user information registered in the repositories can be reflected to the user information location information.

In the above description, accessing the repository, acquiring user information, and updating the user information location information are performed at the timing of receiving a request message from the service server 800. However, by providing a repository access start unit in the user information gateway 300, the user information gateway 300 can acquire user information by cyclically accessing the repository and update the user information location information 1. For example, user information can be checked if it is the latest by accessing the repository once a day (in the middle of the night when the amount of user accesses is small).

Further, by providing a PUSH request response unit in the user information gateway 300, the repository can PUSH an update notification to the user information gateway 300. For example, if a system administrator updates user information registered in a repository, the repository notifies the user information gateway 300 of the update. The user information gateway 300, upon receiving the update notification from the repository, updates the user information location information 1.

In the above description, an example of acquiring the update time and date with user information has been described. Alternatively, information indicating update may be acquired, instead of update time and date.

### [Fourth Exemplary Embodiment]

In the fourth exemplary embodiment, a case where each repository synchronizes user information that the repository is managing will be described. In the fourth exemplary embodiment, synchronizing means updating user information stored in other repository to the latest user information and registering the latest user information.

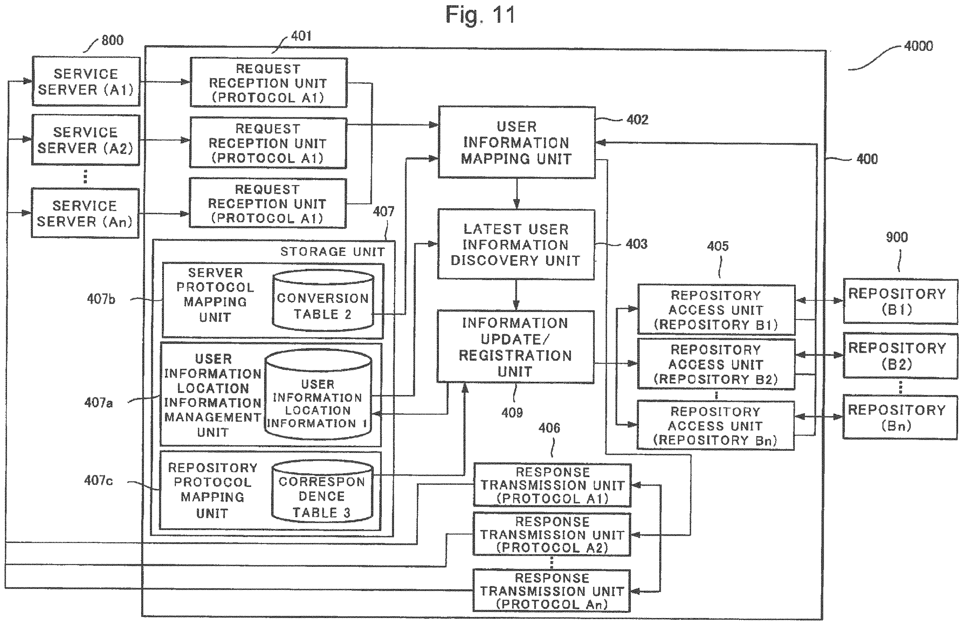

Fig. 11 is a diagram illustrating a configuration of a repository management system 4000 that includes a user information gateway 400 according to the fourth exemplary embodiment. The user information gateway 400 has a configuration equipped with an information update/registration unit 409 in addition to the user information gateway 300 of the third exemplary embodiment without the information acquisition unit and latest information reflection unit. The rest of the components are the same as the equivalent components of the user information gateways of the second and third exemplary embodiments. Thus, the user information gateway 400 includes a request reception unit 401, a user information mapping unit 402, a latest user information discovery unit 403, an information update/registration unit 409, a repository access unit 405, a response transmission unit 406, and a storage unit 407.

The request reception unit 401 receives a message (a request message), which requests user information, transmitted from the service server 800. There may be a plurality of request reception units 401 for respective protocols used by the user information gateway 400. Further, the request reception unit 401 may directly receive a request message from the service server 800 or may indirectly receive a request message via a browser or the like. In the same way as the first to third exemplary embodiments, a request message includes, for example, the user ID of a specific user whose user information is requested by the service server 800 and the specific type of user information requested by the service server 800.

The request message that was transmitted from the service server 800 is input from the request reception unit 401 to the user information mapping unit 402. The user information mapping unit 402 converts a representation indicating the type of user information on the protocol of the service server 800 to an internal representation by referring to a conversion table 2 that is like those in the second and third exemplary embodiments and managed by a server protocol mapping unit 407b of the storage unit 407 and outputs the internal representation to the latest user information discovery unit 403. Further, user information from the repository 900 is input from the repository access unit 405 to the user information mapping unit 402. The user information mapping unit 402 converts the representation indicating the type of user information on the protocol of the repository 900 to a representation in the service server 800 by referring to the conversion table 2 and outputs the representation to the response transmission unit 406.

The latest user information discovery unit 403 searches user information location information 1 like those in the first to third exemplary embodiments based on the type of user information, which was included in the request message and converted to the internal representation, for a repository that registers the latest user information. The user information location information 1 is stored in a user information location information management unit 407a of the storage unit 407. The latest user information discovery unit 403 determines to acquire user information from the repository that stores the latest information.

The information update/registration unit 409 determines the type (e-mail, name, address, telephone number, and the like) of user information that the repository serves. The information update/registration unit 409 converts the internal representation indicating the type of user information to a representation on the protocol used by the repository determined by the latest user information discovery unit 403 by referring to a correspondence table 3 that is like those in the second and third exemplary embodiments and managed by a repository protocol mapping unit 407c of the storage unit 407 and creates a request message corresponding to the determined repository.

The repository access unit 405 transmits the request message that was created by the information update/registration unit 409 to the repository. The repository that received the request message transmits the latest user information in response to the request message from the user information gateway 400. The repository access unit 405 receives the latest user information from the repository. The repository access unit 405 may exist for each protocol for accessing the repository.

Upon receiving the latest user information from the repository, the repository access unit 405 outputs the latest user information and information of the protocol of the repository to the user information mapping unit 402. The user information mapping unit 402 converts the representation indicating the type of user information on the protocol of the repository to a representation on the protocol of the service server 800 that requested the user information by referring to the conversion table 2 managed by the server protocol mapping unit 407b, creates a response message for the service server 800, and outputs the response message to the response transmission unit 406. The response transmission unit 406 transmits the response message created by the user information mapping unit 402 to the service server 800. It should be noted that there may be a plurality of response transmission units 406 for respective protocols.

The storage unit 407 stores the user information location information 1, the conversion table 2, and the correspondence table 3 like those in the second and third exemplary embodiments. That is, the storage unit 407 includes the user information location information management unit 407a, the server protocol mapping unit 407b, and the repository protocol mapping unit 407c.

The user information location information management unit 407a manages the user information location information 1. The server protocol mapping unit 407b manages the conversion table 2. The information managed by the server protocol mapping unit 407b includes information for mapping the type of user information, as well as, information for converting a message. The repository protocol mapping unit 407c manages the correspondence table 3. The information managed by the repository protocol mapping unit 407c includes information for associating (mapping) the type of user information defined in the user information gateway 400 and the type of user information in a repository, as well as, information for converting a message.

The latest user information discovery unit 403 has a function of searching each repository for a repository that registers user information that is not the latest (old), in addition to the function of the latest user information discovery unit 303 of the user information gateway 300 of the above third exemplary embodiment. Then, the latest user information discovery unit 403 determines to transmit a request for updating and registering user information in the repository that registers the old user information. That is, the latest user information discovery unit 403 instructs the information update/registration unit 409 to create a request message, which requests updating and registering of user information, with the repository that registers old user information, which is not the latest, as a destination.

The information update/registration unit 409 creates a message that requests update and registration for the repository that registers old user information. Upon which, the information update/registration unit 409 converts the internal representation indicating the type of user information to a representation on the protocol used by the repository that was determined as registering old and not latest user information by the latest user information discovery unit 403 by referring to the correspondence table 3 and creates a message for requesting update and registration. If the information update/registration unit 409 determines that the type of user information is "e-mail," for example, the information update/registration unit 409 creates a message that requests update and registration of an e-mail address. Further, the information update/registration unit 409 updates the user information location information 1. That is, the information update/registration unit 409 overwrites the update time and date of the user information location information 1 with the present time and overwrites the latest-information management repository with the repository that is subject to update and register the user information.

The repository access unit 405 transmits a request message that was created by the information update/registration unit 409, together with the latest user information, to the repository that is subject to update and register the user information.

The repository, which received the message requesting update and registration together with the latest user information, synchronizes the user information managed by the repository.

As such, the user information gateway 400 can update and register user information managed by the repositories.

The method, with which the repository access unit 405 acquires the latest user information from the repositories, includes a method of acquiring user information by accessing repositories at the timing of receiving a request message from a service as described in the first and second exemplary embodiments. In addition, a case of acquiring user information by cyclically accessing repositories can be considered. Further, a case of the repositories PUSHing an update notification can also be considered.

### [Fifth Exemplary Embodiment]

In the fifth exemplary embodiment, a case of deleting user information managed by repositories will be described. The situations of deleting user information managed by repositories may be considered to include when a user requests deletion and when a storage period has expired according to a predefined rule.

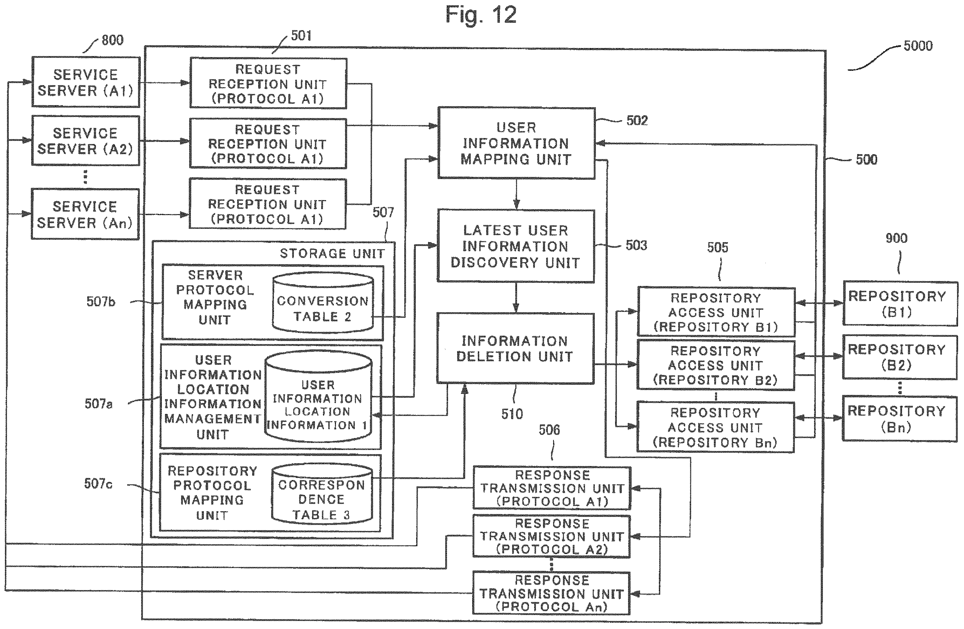

Fig. 12 is a diagram illustrating a configuration of a repository management system 5000 that includes a user information gateway 500 according to the fifth exemplary embodiment. The user information gateway 500 has a configuration equipped with an information deletion unit 510, instead of the information update/registration unit, in addition to the user information gateway 400 of the fourth exemplary embodiment. The rest of the components are the same as those of the user information gateway 400 of the fourth exemplary embodiment. Thus, the user information gateway 500 includes a request reception unit 501, a user information mapping unit 502, a latest user information discovery unit 503, an information deletion unit 510, a repository access unit 505, a response transmission unit 506, and a storage unit 507.

The request reception unit 501 receives a message (a request message), which requests deletion of user information, transmitted from the service server 800. There may be a plurality of request reception units 501 for respective protocols used by the user information gateway 500. Further, the request reception unit 501 may directly receive a request message from the service server 800 or may indirectly receive a request message via a browser or the like. The request message includes, for example, the user ID of a specific user whose user information is requested to be deleted by the service server 800 and the specific kind of user information that is requested by the service server 800.

The deletion request message from the service server 800 is input from the request reception unit 501 to the user information mapping unit 502. The user information mapping unit 502 converts the representation indicating the type of user information on the protocol of the service server 800 to an internal representation by referring to a conversion table 2 that is like those of the second to fourth exemplary embodiments and managed by a server protocol mapping unit 507b of the storage unit 507 and outputs the internal representation to the latest user information discovery unit 503. Further, the user information from the repository 900 is input from the repository access unit 505 to the user information mapping unit 502. The user information mapping unit 502 converts the representation indicating the type of user information on the protocol of the repository 900 to a representation in the service server 800 by referring to the conversion table 2 and outputs the representation to the response transmission unit 506.

The latest user information discovery unit 503 determines deletion of user information in the repository, to which deletion of user information was requested.

The information deletion unit 510 determines the type (e-mail, name, address, telephone number, and the like) of user information that the repository serves. The information deletion unit 510 converts the internal representation indicating the type of user information to a representation on a protocol used by the repository determined by the latest user information discovery unit 503 by referring to a correspondence table 3 like those of the second to fourth exemplary embodiments that is managed by a repository protocol mapping unit 507c of the storage unit 507 and creates a deletion request message for the determined repository. The repository access unit 505 transmits the deletion request message that was created by the information deletion unit 510 to the repository. The repository that received the deletion request message may transmit a notification that the user information has been deleted, in response to the request message from the user information gateway 500. The repository access unit 505 may exist for each protocol for accessing the repository.

The repository access unit 505, receiving the notification that the user information has been deleted from the repository, outputs the notification that the user information has been deleted and information of the protocol of the repository to the user information mapping unit 502. The user information mapping unit 502 converts the representation indicating the type of the user information on the protocol of the repository to a representation on the protocol in the service server 800 that requested the user information by referring to the conversion table 2 managed by the server protocol mapping unit 507b, creates a response message to the service server 800, and outputs the response message to the response transmission unit 506. The response transmission unit 506 transmits the response message created by the user information mapping unit 502 to the service server 800. It should be noted that there may be a plurality of response transmission units 506 for respective protocols.

The storage unit 507 stores the user information location information 1, the conversion table 2, and the correspondence table 3 like those in the second to fourth exemplary embodiments. In other words, the storage unit 507 includes a user information location information management unit 507a, the server protocol mapping unit 507b, and the repository protocol mapping unit 507c. The user information location information management unit 507a manages the user information location information 1. The server protocol mapping unit 507b manages the conversion table 2. The information managed by the server protocol mapping unit 507b includes information for mapping the type of user information, as well as, information for converting a message. The repository protocol mapping unit 507c manages the correspondence table 3. The information managed by the repository protocol mapping unit 507c includes information for associating (mapping) the type of user information defined in the user information gateway 400 and the type of user information in a repository, as well as, information for converting a message.

The latest user information discovery unit 503 has a function of checking whether user information is registered in each repository.

The information deletion unit 510 creates a message that requests deletion for each repository. Upon which, the information deletion unit 510 determines the type of user information that the repository serves. If the information deletion unit 510 determines that the type of user information is, for example, "e-mail," the information deletion unit 510 creates a message that requests deletion of an e-mail address. Further, the information deletion unit 510 updates the user information location information 1 at this timing. Thus, the description of the repository, from which user information is deleted, is deleted from the latest-information management repository that stores the user information location information 1.

As such, the user information gateway 500 can delete user information managed by repositories.

The following will describe utilization examples of the repository management system according to the above-described exemplary embodiments of the present invention.

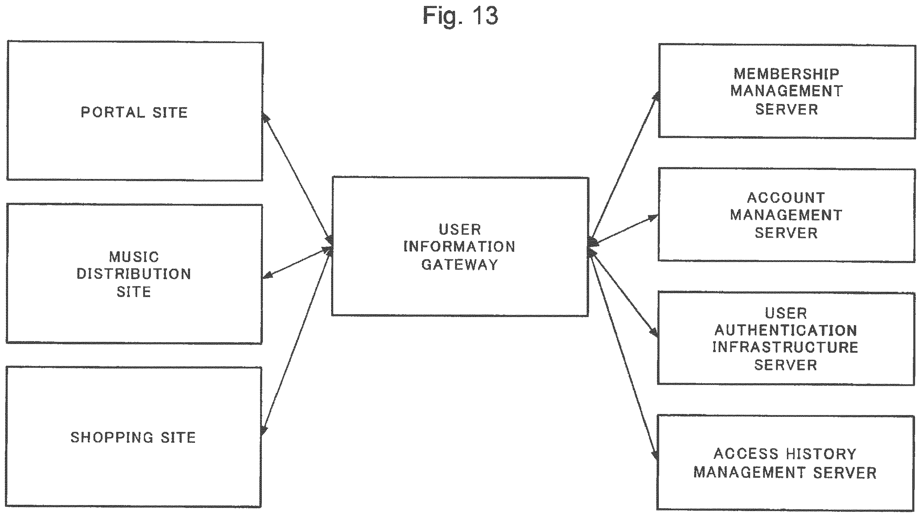

Fig. 13 is a diagram illustrating an example of a user information management system at an on-line site. In general, an on-line site includes a plurality of user information management infrastructures. Each service accesses such repositories via the user information gateway 100 to 500 according to the first to fifth exemplary embodiments, instead of independently accessing the repositories.

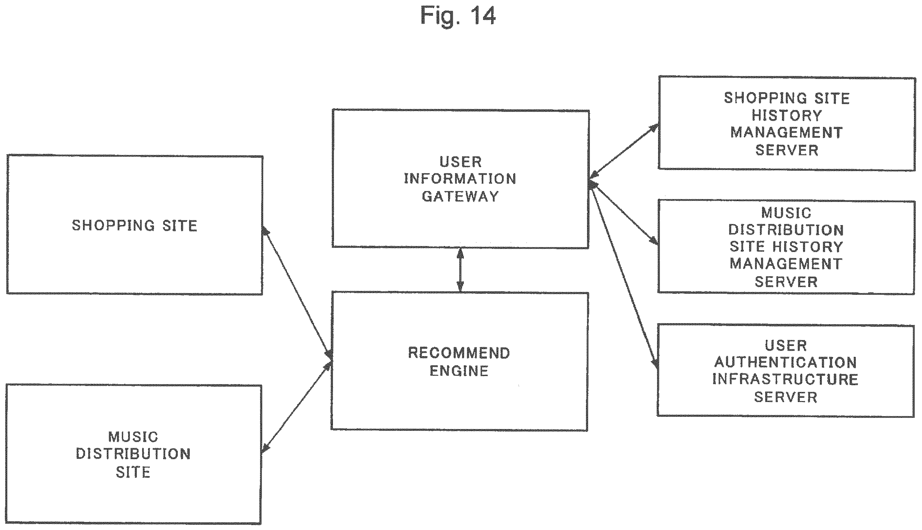

Fig. 14 is a diagram illustrating an example of a user information management system for managing user history information. User information may be collected and analyzed, then, utilized for recommendation and the like. This is utilization of what is called big data. In such a case, each service manages user information, history information, and the like. As such, when a recommend engine utilizes user's history information, the recommend engine needs to access a plurality of repositories. Thus, the recommend engine accesses the repositories via the user information gateway 100 to 500 according to the first to fifth exemplary embodiments. Then, the results of the recommend engine analyzing the history information is provided to each site.

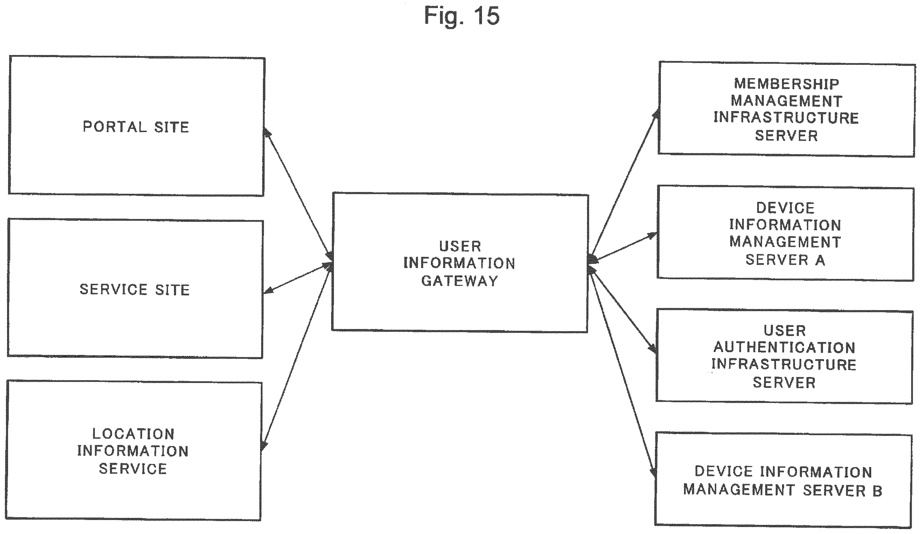

Fig. 15 is a diagram illustrating an example of a user information management system in Machine to Machine (M2M). A variety of device information is managed in a plurality of servers in the M2M system. When a service uses device information, the service needs to access a plurality of servers. Thus, the service accesses a plurality of repositories of which device information is managed by the user information gateway 100 to 500 according to the first to fifth exemplary embodiments.

While the above description explained the exemplary embodiments of the present invention, it will be understood that the present invention includes other modifications and applications without limitation to the above exemplary embodiments and without departing from the spirit of the present invention.

A part or whole of the above-described exemplary embodiments can be described as follows without limitation.

### (Supplementary Note 1)

A repository management device including: a request reception unit that receives a message, which requests user information, from a service server; a latest user information discovery unit that determines a repository that stores last update user information by referring to user information location information that is information capable of identifying a repository that stores the last update user information from among a plurality of repositories that store user information; a repository access unit that acquires the user information designated by the message from the determined repository; and a response transmission unit that transmits the information acquired by the repository access unit to the service server.

### (Supplementary Note 2)

The repository management device according to Supplementary Note 1 further including: a user information mapping unit that converts the user information designated by the message received by the request reception unit to user information defined in the repository management device by referring to a conversion table that associates a protocol used by the service server and the user information defined in the repository management device; and an information acquisition unit that creates a message, which requests user information, for a repository that stores last update user information by referring to a correspondence table that associates the user information defined in the repository management device and a protocol used by the repository, wherein the repository access unit transmits the message created by the information acquisition unit to the repository storing the last update user information and acquires the user information corresponding to the converted user information from the repository.

### (Supplementary Note 3)

The repository management device according to Supplementary Note 1 or 2 wherein the repository access unit further includes a latest information reflection unit that acquires the user information designated by the message from a plurality of repositories, determines whether the user information acquired by the repository access unit has been modified, and, if the user information has been modified, updates the user information location information.

### (Supplementary Note 4)

The repository management device according to any one of Supplementary Notes 1 to 3 further including an information update/registration unit, wherein the repository access unit acquires the user information from a plurality of repositories and the information update/registration unit creates a message, which requests update of the user information, for a repository that stores user information that is not the latest among the plurality of repositories and updates the user information location information.

### (Supplementary Note 5)

The repository management device according to any one of Supplementary Notes 1 to 3 further including a deletion unit, wherein
the repository access unit acquires user information from a repository that stores the user information, and
the deletion unit creates a message that requests deletion of user information for the repository and updates the user information location information.

### (Supplementary Note 6)

The repository management device according to Supplementary Notes 3 to 5, wherein the repository access unit acquires the user information by cyclically accessing the repositories.

### (Supplementary Note 7)

The repository management device according to Supplementary Notes 3 to 5, wherein, when the user information has been modified in the repository, the repository access unit acquires the user information from the repository.

### (Supplementary Note 8)

A repository management method of a repository management device that mediates communications between a service server and repositories, the method including: receiving a message, which requests user information, from a service server;
determining a repository that stores last update user information by referring to user information location information that is information capable of identifying the repository that stores the last update user information from among a plurality of repositories that store user information;
acquiring the user information designated by the message from the determined repository; and
transmitting the acquired user information to the service server.

### (Supplementary Note 9)

The repository management method according to Supplementary Note 8 further including:
converting the user information in the message received from the service server to user information defined in the repository management device by referring to a conversion table that associates a protocol of the service server and the user information defined in the repository management device:
   creating a message that requests the user information for a repository that stores the last update user information by referring to a correspondence table that associates the user information defined in the repository management device and a protocol used by the repository;
   transmitting the created message to the repository that stores the last update user information; and acquiring the user information corresponding to the converted user information from the repository.

### (Supplementary Note 10)

The repository management method according to Supplementary Note 8 or 9 further including:
acquiring user information designated by the message from a plurality of repositories; and
determining whether the acquired user information has been modified, and, if the acquired user information has been modified, updating the user information location information.

### (Supplementary Note 11)

The repository management method according to any one of Supplementary Notes 8 to 10 further including: acquiring user information from a plurality of repositories; creating a message, which requests update of the user information, for a repository that stores user information that is not the latest among the plurality of repositories, and updating the user information location information.

### (Supplementary Note 12)

The repository management method according to any one of Supplementary Notes 8 to 10, further including:
acquiring user information from the repository that stores the user information;
creating a message, which requests deletion of the user information, for the repository; and updating the user information location information.

### (Supplementary Note 13)

The repository management method according to any one of Supplementary Notes 10 to 12, further including acquiring the user information by cyclically accessing the repositories.

### (Supplementary Note 14)

The repository management method according to any one of Supplementary Notes 10 to 12 further including: when the user information has been modified in the repository, acquiring user information from the repository.

### (Supplementary Note 15)

A repository management system including:
a service server that transmits a message requesting user information;
a repository that stores user information;
a request reception unit that receives the message, which requests the user information, from the service server;
a latest user information discovery unit that determines a repository that stores last update user information by referring to user information location information that is information capable of identifying a repository that stores the last update user information from among a plurality of repositories that store user information;
a repository access unit that acquires user information designated by the message from the determined repository; and a response transmission unit that transmits the information acquired from the repository access unit to the service server.

This application claims priority based on Japanese Patent Application No. 2014-035285 filed on February 26, 2014, which application is incorporated herein in its entirety by disclosure.

### [Reference signs List]

1 User information location information
2 Conversion table
3 Correspondence table
100 Repository management device
200, 300, 400, 500 Repository management device (user information gateway)
101, 201, 301, 401, 501 Request reception unit
202, 302, 402, 502 User information mapping unit
103, 203, 303, 403, 503 Latest user information discovery unit
204, 304 Information acquisition unit
105, 205, 305, 405, 505 Repository access unit
106, 206, 306, 406, 506 Response transmission unit
207, 307, 407, 507 Storage unit
207a, 307a, 407a, 507a User information location information management unit
207b, 307b, 407b, 507b Server protocol mapping unit
207c, 307c, 407c, 507c Repository protocol mapping unit
308 Latest information reflection unit
409 Information update/registration unit
510 Information deletion unit
800 Service server
900 Repository
1000, 2000, 3000, 4000, 5000 Repository management system

## Claims

1. A repository management device comprising:
a request reception unit that receives a message, which requests user information, from a service server; a latest user information discovery unit that determines a repository that stores last update user information by referring to user information location information that is information capable of identifying a repository that stores the last update user information from among a plurality of repositories that store user information;
a repository access unit that acquires the user information designated by the message from the determined repository; and
a response transmission unit that transmits the information acquired by the repository access unit to the service server.

2. The repository management device according to claim 1, further comprising:
a user information mapping unit that converts the user information designated by the message received by the request reception unit to user information defined in the repository management device by referring to a conversion table that associates a protocol used by the service server and the user information defined in the repository management device; and
an information acquisition unit that creates a message, which requests user information, for a repository that stores last update user information by referring to a correspondence table that associates the user information defined in the repository management device and a protocol used by the repository, wherein the repository access unit transmits the message created by the information acquisition unit to the repository storing the last update user information and acquires the user information corresponding to the converted user information from the repository.

3. The repository management device according to claim 1 or 2, wherein the repository access unit further comprises a latest information reflection unit that acquires the user information designated by the message from a plurality of repositories, determines whether the user information acquired by the repository access unit has been modified, and, if the user information has been modified, updates the user information location information.

4. The repository management device according to any one of claims 1 to 3, further comprising an information update/registration unit, wherein
the repository access unit acquires the user information from a plurality of repositories, and
the information update/registration unit creates a message, which requests update of the user information, for a repository that stores user information that is not the latest among the plurality of repositories and updates the user information location information.

5. The repository management device according to any one of claims 1 to 3, further comprising a deletion unit, wherein
the repository access unit acquires user information from a repository that stores the user information, and
the deletion unit creates a message that requests deletion of user information for the repository and updates the user information location information.

6. The repository management device according to claims 3 to 5. wherein the repository access unit acquires the user information by cyclically accessing the repositories.

7. The repository management device according to claims 3 to 5, wherein,
when the user information has been modified in the repository, the repository access unit acquires the user information from the repository.

8. A repository management method of a repository management device that mediates communications between a service server and repositories, the method comprising:
receiving a message, which requests user information, from a service server;
determining a repository that stores last update user information by referring to user information location information that is information capable of identifying the repository that stores the last update user information from among a plurality of repositories that store user information;
acquiring the user information designated by the message from the determined repository; and
transmitting the acquired user information to the service server.

9. The repository management method according to claim 8, further comprising:
converting the user information in the message received from the service server to user information defined in the repository management device by referring to a conversion table that associates a protocol of the service server and the user information defined in the repository management device;
creating a message that requests the user information for a repository that stores the last update user information by referring to a correspondence table that associates the user information defined in the repository management device and a protocol used by the repository; and
transmitting the created message to the repository that stores the last update user information; and acquiring the user information corresponding to the converted user information from the repository.

10. A repository management system comprising:
a service server that transmits a message requesting user information;
a repository that stores user information;
a request reception unit that receives the message, which requests the user information, from the service server;
a latest user information discovery unit that determines a repository that stores last update user information by referring to user information location information that is information capable of identifying a repository that stores the last update user information from among a plurality of repositories that store user information;
a repository access unit that acquires user information designated by the message from the determined repository; and
a response transmission unit that transmits the information acquired from the repository access unit to the service server.
